(19) Europäisches Patentamt
European Patent Office
Office européen des brevets

(11) Numéro de publication: **0 487 379 B1**

(12) **FASCICULE DE BREVET EUROPEEN**

(45) Date de publication de fascicule du brevet: **19.10.94**

(21) Numéro de dépôt: **91403029.1**

(22) Date de dépôt: **08.11.91**

(51) Int. Cl.5: **C22B 7/00**, C22B 3/14, C22B 3/30, C22B 3/36, B01J 23/94, B01J 38/64, C22B 34/36, C22B 23/02

# (54) Nouveau procédé de traitement antipollution d'un catalyseur de raffinage à l'état usé et récupération totale des différents constituants métalliques dudit catalyseur.

(30) Priorité: **12.11.90 FR 9014129**

(43) Date de publication de la demande:
**27.05.92 Bulletin 92/22**

(45) Mention de la délivrance du brevet:
**19.10.94 Bulletin 94/42**

(84) Etats contractants désignés:
**BE ES IT LU NL**

(56) Documents cités:
**EP-A- 0 244 014**
**US-A- 4 087 510**
**US-A- 4 432 953**
**US-A- 4 500 495**
**US-A- 4 514 369**
**JP-A-47 031 892**
**US-A- 4 145 397**
**US-A- 4 434 141**
**US-A- 4 514 368**
**US-A- 4 670 229**

(73) Titulaire: **INSTITUT FRANCAIS DU PETROLE**
**4, avenue de Bois Préau**
**F-92502 Rueil-Malmaison (FR)**

(72) Inventeur: **Trinh Dinh, Chan**
**7, Allée des Oeillets**
**F-78110 Le Vésinet (FR)**
Inventeur: **Llido, Eric**
**Le Clos des Vignes**
**F-69360 Serezin du Rhone (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 487 379 B1

## Description

La présente invention décrit un procédé de traitement antipollution et de la récupération des métaux d'un catalyseur de raffinage à l'état usé, procédé dans lequel on procède à une destruction quasiment totale du catalyseur et on obtient finalement à la fois une récupération quasiment totale de tous les constituants métalliques dudit catalyseur et une phase aqueuse rejetable pour la protection de l'environnement.

Dans les opérations d'hydrotraitement ou d'hydroconversion d'une charge pétrolière, le catalyseur utilisé se couvre peu à peu des dépôts de carbone et d'au moins un métal contaminant choisi dans le groupe formé par le vanadium, le nickel et le fer, provenant de la charge traitée.

Ces dépôts métalliques forment une croûte autour de la surface extérieure des grains de catalyseur et limitent donc la diffusion des molécules d'hydrocarbures dans les pores du catalyseur. Il s'ensuit une perte progressive d'activité catalytique qui peut être totale lorsque tous les pores du catalyseur sont remplis desdits métaux.

Les catalyseurs de départ sont généralement constitués d'un support minéral et d'au moins un métal actif du groupe VIB et/ou du groupe VIII, au moins en partie à l'état de sulfure.

Par métal du groupe VIB et/ou du groupe VIII, on entend les métaux tels que le molybdène, le tungstène, le nickel, le cobalt notamment.

Par support minéral, on entend les oxydes réfractaires du groupe aluminium et/ou silicium tels que par exemple le trioxyde d'aluminium ou le dioxyde de silice ou leurs mélanges.

Récemment l'Administration des Nations Unies pour la protection de l'Environnement sous la haute autorité de son directeur Monsieur Mostafa TOLBA a décrété que désormais un catalyseur de raffinage à l'état usé doit être classé comme étant un déchet solide hautement toxique et dangereux (The UNEP document C (88)90 Final released June 1988, included Spent Catalyst. Source : C & E News p.p. 21-22, 4/3/1989).

Si le stockage d'un tel catalyseur qui doit faire l'objet de mesures particulières et coûteuses est toléré jusqu'à présent, la destruction pourrait dans un proche avenir devenir obligatoire. Il est de ce fait connu que les gouvernements des pays industrialisés incitent les producteurs et les utilisateurs des catalyseurs à trouver un traitement de destruction de tels déchets.

On entend par catalyseur à l'état usé un catalyseur désactivé par les dépôts de carbone et d'au moins un métal contaminant choisi dans le groupe constitué par le vanadium, le nickel et le fer, et ne possèdant plus de résistance mécanique suffisante pour être récyclé et/ou réutilisé après un traitement d'extraction desdits métaux et donc non régénérable.

Le demandeur a déjà élaboré antérieurement un procédé (FR-A-90/13601 du 30/10/1990) permettant une récupération importante des métaux d'un tel catalyseur et démontré dans ledit procédé que le solide résiduel et la phase aqueuse finale peuvent être rejetés sans risque de pollution pour la protection de l'environnement.

Le procédé de la présente invention est caractérisé en ce que le traitement antipollution et de la récupération des métaux d'un catalyseur de raffinage à l'état usé, notamment des catalyseurs d'hydrotraitement ou d'hydroconversion d'une charge pétrolière, n'implique aucun rejet de solide, tous les constituants métalliques du catalyseur étant quasiment totalement récupérés y compris la totalité des métaux choisis dans le groupe formé par les métaux du groupe VIII tels que le nickel, le cobalt, le fer, et l'aluminium, lesdits métaux étant présents dans le catalyseur usé (c'est-à-dire avant le traitement selon la présente invention); autrement dit le traitement selon la présente invention permet donc de s'affranchir complètement des contraintes relatives aux normes de protection de l'environnement quelles qu'elles soient à ce jour ou dans l'avenir concernant un rejet solide contenant des métaux toxiques même en quantités réduites.

Selon la présente invention, on procède à un traitement thermique d'un mélange intime d'un catalyseur usé après une calcination par un gaz contenant de l'oxygène (par exemple de l'air) avec la soude caustique solide à une température égale ou supérieure à celle de la fusion de ladite base minérale.

Cette opération de fusion alcaline que nous appelons cuisson sodique peut être effectuée dans un appareillage sous pression type autoclave par exemple en présence d'un gaz inerte ou d'un gaz contenant de l'oxygène (par exemple de l'air) mais on préfère une technique plus aisée en utilisant simplement une cuve en acier inoxydable ouverte à la pression atmosphérique.

Dans ces conditions, on obtient après ladite cuisson sodique une masse solide que nous appelons gâteau sodique, lequel se dissout aisément par de l'eau malgré sa très grande dureté (comparable au ciment).

D'autre part on prépare une véritable pâte dite sodique, avant l'opération proprement dite de cuisson sodique, que l'on obtient aisément par un mélange solide humidifié constitué du catalyseur préalablement

calciné et réduit en granulométrie fine (par exemple une fraction inférieure ou égale à 500 micromètres) et la soude caustique à l'état solide, en présence d'eau.

Alors les conditions sont très favorables pour une conversion chimique totale et complète des oxydes de métaux avec la soude caustique à l'état fondu en sels sodiques correspondants et totalement solubles à l'étape suivante de dissolution aqueuse du gâteau sodique (lesdits métaux étant choisis dans le groupe formé par le vanadium, le tungstène, le molybdène et l'aluminium et étant présents initialement dans le catalyseur usé).

Par exemple pour un mélange solide constitué de 100 grammes de poudre de catalyseur calciné (par exemple une fraction recueillie après tamisage à 500 micromètres) et 117,5 grammes de soude caustique en pastilles, un volume d'eau d'environ 30 à 35 millilitres est suffisant pour la formation d'une bonne pâte sodique.

Les métaux choisis dans le groupe formé par le nickel, le cobalt et le fer sont insolubles dans la solution de dissolution aqueuse du gâteau sodique, ce qui permet une récupération totale et économique de tous les métaux de ce groupe présents dans le gâteau sodique par une simple filtration classique, et par voie de conséquence d'obtenir avantageusement un filtrat ne contenant que les sels sodiques solubles de tous les métaux présents dans le gâteau sodique et choisis dans le groupe formé par le vanadium, le tungstène, le molybdène et l'alumimum.

La fusion alcaline d'un tel mélange solide constitué d'un catalyseur de raffinage à l'état usé après une calcination par un gaz contenant de l'oxygène et une base minérale (telle que par exemple la soude caustique) est un traitement non encore utilisé jusqu'à présent et constitue donc une des caractéristiques de la présente invention. On pense que la raison essentielle est que l'on évite a priori d'avoir à traiter ultérieurement une solution aqueuse contenant une quantité importante d'aluminium soluble en mélange avec les métaux choisis dans le groupe formé par le vanadium, le tungstène et le molybdène.

On peut constater par exemple que les traitements d'un catalyseur d'hydrotraitement à l'état usé décrits dans les principaux procédés existants en vue de la récupération du vanadium, du tungstène et du molybdène, lesquels sont généralement considérés comme étant les métaux les plus valorisables, essayent de minimiser l'attaque de l'alumine du support du catalyseur; tels les cas par exemple des procédés décrits dans les brevets US-A-3 773 890, US-A-4 087 510, US-A-4 145 397, US-A-4 491 157, US-A-4 666 685. Pour ce faire on procède à une calcination du catalyseur usé par de l'air à une température très élevée en vue d'une transformation préalable de l'alumine gamma réactive en alumines supérieures bêta et/ou gamma nettement plus réfractaires à l'étape de la lixiviation basique par une solution aqueuse contenant une base alcaline ou un carbonate alcalin ou dans le cas de grillage alcalin en utilisant un carbonate alcalin (par exemple le carbonate de sodium) et un chlorure alcalin (par exemple le chlorure de sodium), lesquels sels sont nettement moins réactifs qu'une base alcaline (par exemple la soude caustique) vis-à-vis de l'alumine du support du catalyseur.

Il est connu de l'Homme de l'Art qu'une séparation élevée voire totale de l'alumimum des métaux choisis dans le groupe formé par le vanadium, le tungstène et le molybdène et présents dans une solution aqueuse basique (par exemple la soude caustique) constitue un problème généralement très difficile à résoudre chimiquement et de façon économique, et encore plus lorsqu'il s'agit de traiter une solution contenant pratiquement la totalité de l'alumine dissoute du support du catalyseur.

Le demandeur a cependant précédemment montré dans le procédé mis au point antérieurement (FR-A-90/13601 du 30/10/1990) qu'un bullage de dioxyde de carbone gazeux dans une solution aqueuse de lixiviation basique (de soude caustique ou de carbonate de sodium) d'un catalyseur usé après une calcination par de l'air permet d'obtenir dans les conditions opératoires optimisées une désalumination pratiquement totale et que les précipités d'aluminium sont du trihydroxyde d'aluminium ou un carbonate mixte de sodium et d'aluminium communément appelé Dowsonite.

## ÉTAT DE LA TECHNIQUE ANTÉRIEURE

On peut citer par exemple et pour la comparaison les deux procédés suivants dans lesquels les auteurs procèdent également à un traitement thermique de grillage alcalin, mais à une température particulièrement élevée, d'un mélange solide constitué d'un catalyseur usé non préalablement calciné par de l'air (c'est-à-dire les métaux sont à l'état de sulfure et le carbone n'est pas éliminé) et d'un sel de sodium. Les sels de sodium utilisés, en l'occurence le carbonate de sodium et le chlorure de sodium, permettent de minimiser l'attaque de l'alumine du support du catalyseur et donc d'obtenir, à l'étape suivante de la dissolution aqueuse des sels sodiques formés, une solution aqueuse sélective en métaux choisis dans le groupe formé par le vanadium, le tungstène et le molybdène et présents initialement dans le catalyseur usé. Les métaux insolubles choisis dans le groupe formé par le nickel et le cobalt et présents initialement dans le catalyseur

usé restent en totalité dans l'alumine non attaquée du catalyseur autrement dit dans le solide résiduel après ledit traitement aqueux.

Dans le procédé décrit dans le brevet US-A-4 087 510, on traite un mélange solide constitué d'un catalyseur d'hydrodésulfuration à l'état usé et de carbonate de sodium à une température élevée comprise généralement entre 650 et 850 °C, en présence d'un débit d'air suffisant et pendant 1 à 2 heures pour la combustion du carbone et la conversion du soufre et des métaux en composés solubles dans l'eau à l'étape suivante, lesdits métaux étant choisis dans le groupe formé par le vanadium et le molybdène et étant présents initialement dans le catalyseur usé.

Le rapport pondéral catalyseur/$Na_2O$ (carbonate de sodium calciné) ne doit pas être inférieur à 1:0,8 pour éviter une attaque importante de l'alumine du support. Pour le rapport optimisé égal à 1:0,6, le résidu solide après l'extraction aqueuse des sels formés à l'étape précédente est de 40,5 % poids par rapport au catalyseur usé mis au départ à traiter. Dans ces conditions, l'aluminium extrait de l'aluminium du support est faible et représente seulement 1 à 2 % poids. Il reste dans le résidu final 4,19 % de vanadium, 3,12 % de molybdène, la totalité des métaux choisis dans le groupe formé par le nickel et le cobalt étant non extraits; ceci pour un catalyseur de départ contenant en pourcentage poids 35 à 37 % d'aluminium, 8,4 à 8,8 % de vanadium, 3,5 à 3,8 % de molybdène, 2,6 % de nickel, 2,0 % de cobalt, 13 à 14 % de soufre et 12 à 15 % de carbone.

En ce qui concerne le solide résiduel, il est simplement indiqué dans la partie descriptive dudit brevet que l'on peut utiliser la technique habituelle qui consiste en une dissolution avec une solution aqueuse concentrée de soude caustique dans un appareillage sous pression d'oxygène type autoclave, à une température élevée et pour une durée suffisante pour obtenir une solution aqueuse d'aluminate de sodium.

Le résidu solide séparé par filtration peut être éventuellement traité par une réduction des oxydes de nickel et de cobalt par de l'hydrogène, suivie d'une lixiviation par une solution aqueuse d'acide sulfurique dans ledit brevet.

L'intérèt de ce procédé US-A-4 087 510 est un traitement permettant une extraction sélective des métaux choisis dans le groupe formé par le vanadium et le molybdène avec une attaque limitée de l'aluminum du support du catalyseur, mais il reste dans le résidu solide final une quantité relativement importante de ces deux métaux.

Enfin l'obligation d'utiliser un appareillage sous forte pression d'oxygène pour dissoudre l'alumine du solide résiduel dans une seconde étape peut constituer une technique nettement moins aisée à mettre en oeuvre qu'une technique permettant d'opérer à la pression atmosphérique, surtout lorsqu'il s'agit de traiter une quantité importante de catalyseur par passe (par exemple 1 tonne ou plus) à l'échelle industrielle.

Le procédé de traitement d'un catalyseur d'hydrodésulfuration à l'état usé décrit dans le brevet US-A-3 773 890 doit comporter également au moins deux principales étapes qui sont décrites ci-dessous.

La première opération consiste en un traitement thermique dans un four à mouffle d'un mélange solide constitué de chlorure de sodium et d'un catalyseur usé après une calcination par de l'air à une température élevée (généralement comprise entre 800 et 850 °C) pendant quelques heures.

Les conditions opératoires les plus favorables pour le traitement de la fusion alcaline sont : une quantité de chlorure de sodium correspondant à 40 % poids par rapport au catalyseur usé de départ, une température égale à ou voisine de 825 °C, un excès d'air et une durée de 4 heures.

La masse obtenue est traitée ensuite par de l'eau à une température de reflux pendant 1 heure pour extraire les sels sodiques de vanadium et de molybdène formés.

Les bilans des métaux, déterminés à partir des dosages dans la solution aqueuse résultante, montrent que les taux d'extractions en pourcentage poids de vanadium et de molybdène peuvent atteindre entre 96,5 % et 97 %, la concentration de l'aluminium soluble étant très faible, inférieure ou égale à 0,1 gramme par litre.

Le deuxième opération consiste en un traitement de la dissolution de l'alumine du solide restant par une solution aqueuse concentrée de soude caustique dans un autoclave sous une pression d'oxygène de 13,8 à 20,7 bars et une durée de 2 à 3 heures.

La dissolution maximale de l'alumine en aluminate de sodium soluble dans l'eau est de 95 à 96 % poids.

Les métaux insolubles choisis dans le groupe formé par le nickel et le cobalt restent dans le résidu final.

Ce procédé permet une meilleure démétallation du vanadium et du molybdène d'un catalyseur usé mis à traiter par comparaison au procédé précédent US-A-4 087 510, mais il nécessite une consommation importante de chlorure de sodium à l'étape de traitement de grillage alcalin : par exemple 0,4 kilogramme de catalyseur traité.

On retrouve cependant dans ce procédé US-A-3 773 890 pratiquement les mêmes autres inconvénients que ceux déjà indiqués pour le procédé précédent US-A-4 087 510.

Le document J P-A-47031892 décrit un procéde de récupération de vanadium et de mobybdène à partir d'un catalyseur usé comprenant une première étape de calcination puis une seconde étape de traitement en présence de NaOH, $Na_2CO_3$ et/ou Na $HCO_3$ à température supérieure à 600 ° C.

Le document US-A 4514368 décrit une récupération de métaux d'un catalyseur à l'état usé comportant une première étape de calcination à température inférieure à 600 ° C puis une seconde étape de lixiviation en présence de solution d'ammoniaque ou de sel d'ammonium.

Le traitement antipollution et de la récupération de métaux d'un catalyseur de raffinage à l'état usé selon la présente invention se distingue des procédés précités et est caractérisé par l'ensemble des avantages suivants :

- Mise en oeuvre simplifiée ne nécessitant pas l'utilisation d'un appareillage sous pression.
- Traitement de destruction totale du catalyseur en une opération unique, permettant une conversion chimique totale et complète des oxydes métalliques des métaux choisis dans le groupe formé par le vanadium, le tungstène, le molybdène et l'aluminium du catalyseur en sels sodiques solubles dans l'eau.
- Séparation et récupération totale et sélective de l'aluminium par rapport à tous les métaux de la solution aqueuse choisis dans le groupe formé par le vanadium, le tungstène et le molybdène et présents initialement dans le catalyseur usé.
- Traitements économiques de la récupération pratiquement totale et séparée des métaux choisis dans le groupe formé par le vanadium , le tungstène et le molybdène et présents initialement dans le catalyseur usé, lesdits métaux provenant de la solution aqueuse basique après le traitement de la désalumination totale et complète, et de la totalité des métaux contaminants choisis dans le groupe formé par le nickel, le cobalt et le fer et présents initialement dans le catalyseur usé.
- Obtention finale d'une phase aqueuse neutre exempte de métaux toxiques et parfaitement rejetable sans risque de pollution de l'environnement.

L'invention concerne un procédé de traitement antipollution et de la récupération des métaux d'un catalyseur de raffinage d'une charge pétrolière, lequel catalyseur, à support à base d'au moins une alumine, a été désactivé et contient du carbone, au moins un métal choisi dans le groupe formé par le nickel, le cobalt et le fer, et au moins un métal choisi dans le groupe constitué par le vanadium, le tungstène et le molybdène ; le procédé étant caractérisé en ce que :

1. On calcine au cours d'une première étape ledit catalyseur en présence d'un gaz renfermant de l'oxygène moléculaire à une température ne dépassant pas 600 ° C.
2. On soumet au cours d'une deuxième étape le catalyseur à un traitement thermique en présence d'une base alcaline à une température au moins égale à celle de la fusion de ladite base, lequel traitement permet une conversion totale et complète des oxydes des métaux, choisis dans le groupe formé par le vanadium, le molybdène, le tungstène et l'aluminium et présents initialement dans le catalyseur usé, en sels sodiques correspondants.
3. On dissout ensuite éventuellement la masse solide compacte provenant du traitement précédent par de l'eau permettant ainsi d'obtenir une dissolution complète des sels sodiques formés des métaux choisis dans le groupe formé par le vanadium, le tungstène, le molybdène et l'aluminium et présents initialement dans le catalyseur usé, les métaux choisis dans le groupe formé par le nickel, le cobalt et le fer et présents initialement dans le catalyseur usé se retrouvant sous la forme d'un précipité aisément séparable par filtration.

En ce qui concerne le traitement thermique du catalyseur avec la base alcaline à l'état fondu, le rapport pondéral base minérale/masse de catalyseur mis a traiter est de préférence au moins égal à 1 : 1.

Autour des deux premières étapes essentielles du procédé décrites ci-dessus se greffent des modes opératoires préférés ainsi qu'il est expliqué ci-dessous.

Selon la présente invention, le procédé de traitement antipollution et de la récupération des métaux d'un catalyseur de raffinage à l'état usé comporte principalement un processus qui est un traitement thermique du catalyseur en présence d'une base alcaline à l'état fondu suivi d'un traitement aqueux et d'une filtration, et un processus éventuel complémentaire de traitements successifs des filtrats pour les récupérations des métaux extraits choisis dans le groupe formé par le vanadium, le tungstène, le molybdène et l'aluminium et présents initialement dans le catalyseur usé.

Premier processus : Destruction du catalyseur usé

Le traitement de destruction d'un catalyseur usé se fait selon les étapes suivantes, représentées dans le schéma récapitulatif de la figure 1.

a) Eventuellement le catalyseur usé, déchargé d'une unité industrielle par la conduite (1), est d'abord soumis à un strippage en zone (2) pour éliminer l'huile adherente ; ledit strippage se fait grâce à l'un au moins des produits suivants : un solvant aromatique (par exemple le toluène), un hydrocarbure saturé (par exemple un gas-oil). Tout autre moyen connu est aussi envisageable. On procède ensuite dans la zone (3) à l'élimination du solvant de strippage.

b) Le catalyseur éventuellement strippé à l'étape a) est calciné en présence d'un gaz renfermant de l'oxygène (par exemple par de l'air) dans une zone (4) pour éliminer le carbone et transformer les sulfures métalliques en un mélange constitué par les oxydes et les sulfates métalliques correspondants. La température de calcination ne doit pas dépasser 600 °C pour minimiser (au mieux éviter) une interaction forte des oxydes formés avec l'alumine du support du catalyseur et de même une transformation allotropique de l'alumine gamma en alumines supérieures bêta et/ou alpha, autrement dit pour favoriser une transformation maximale des métaux, choisis dans le groupe formé par le vanadium, le molybdène, le tungstène et l'aluminium et présents initialement dans le catalyseur usé, en sels sodiques correspondants solubles dans l'eau à une étape ultérieure (étape e)).

c) Le catalyseur calciné provenant de l'étape b) est de préférence dans une zone (5) d'abord soumis à un broyage en granulométrie fine de préférence avec une limite supérieure de granulométrie égale à 2000 micromètres, ce qui permet une interaction chimique plus aisée et plus complète des oxydes des métaux, choisis dans le groupe formé par le vanadium, le molybdène, le tungstène et l'aluminium et présents initialement dans le catalyseur usé, avec la base alcaline à l'état fondu à l'étape suivante (étape d)).

On constate par contre que, dans le cas où le catalyseur n'est pas préalablement broyé en poudre fine (par exemple une fraction entre 500 et 600 micromètres) certains extrudés ou billes du catalyseur ne sont visiblement que partiellement attaqués par la base alcaline en fusion (en zone (6) étape d)) lors d'un traitement économique avec un rapport pondéral base alcaline/catalyseur généralement inférieur à 2:1 dans le cas de la soude caustique.

d) Le mélange solide constitué par la poudre du catalyseur calciné et par la base alcaline (par exemple la soude caustique) est mis à traiter dans une zone (6) dans une cuve en acier inoxydable à une température au moins égale à la température de fusion de ladite base (température de fusion de la soude caustique : 321 °C).

Cependant on a découvert qu'une humidification préalable dudit mélange solide avant la fusion alcaline (en ladite zone (6)) permet éventuellement d'obtenir un rapport pondéral base minérale/catalyseur usé avantageusement plus faible (par exemple seulement entre 1:1 et 1,2:1 dans le cas de la soude caustique), ledit rapport étant nécessaire à une conversion chimique complète des oxydes des métaux en sels sodiques correspondants (lesdits métaux étant choisis dans le groupe formé par le vanadium, le molybdène, le tungstène et l'aluminium et étant présents initialement dans le catalyseur usé).

La quantité minimale d'eau nécessaire à une bonne humidification dudit mélange pour obtenir un mélange intime sous forme d'une véritable pâte dite sodique est généralement comprise entre 300 et 350 millilitres par kilogramme de catalyseur calciné.

Les autres conditions opératoires les plus favorables sont une température comprise entre 350 et 400 °C, de préférence une température comprise entre 360 et 370 °C, et une durée de quelques minutes à une soixantaine de minutes, de préférence entre 30 et 45 minutes.

On obtient en fin du traitement de fusion alcaline une masse solide compacte et très dure, comparable au ciment, dite gâteau sodique.

e) On met en contact le gâteau sodique provenant de l'étape d) dans une zone (7) avec de l'eau permutée à une température comprise entre la température ambiante (généralement entre 18 et 25 °C) et la température d'ébullition (généralement entre 100 et 105 °C), de préférence à une température comprise entre 80 et 90 °C, pour une dissolution rapide de la totalité des sels sodiques de métaux choisis dans le groupe formé par le vanadium, le tungstène, le molybdène et l'aluminium et présents initialement dans le catalyseur usé.

On constate que la densité apparente de la solution aqueuse résultante de la dissolution du gâteau sodique est un paramètre critique, lequel doit se situer entre 1 et 1,5 , de préférence entre 1,20 et 1,25.

Dans la pratique on constate qu'un volume d'eau adéquat pour obtenir une densité apparente de la solution de dissolution du gâteau sodique provenant du traitement d'un kilogramme de catalyseur calciné égale par exemple à 1,21 est de 5 litres par kilogramme de catalyseur mis à traiter.

L'utilisation d'un volume d'eau plus réduit (par exemple 3 litres) conduit d'une part à une perte importante de filtrat en zone (13) et d'autre part engendre une filtration plus difficile des masses abondantes des cristaux précipités d'orthovanadate de sodium en zone (12) et de même pour la séparation du trihydroxyde d'aluminium précipité et du filtrat en zones (15) et (16) après l'opération de la désalumination à l'étape h). (figure 2).

f) la solution hétérogène de la dissolution aqueuse du gâteau sodique provenant de l'étape e) est mise à filtrer dans une zone (8). On récupère ainsi un précipité 1 en zone (9) constitué essentiellement de tous les métaux insolubles, choisis dans le groupe formé par le nickel, le cobalt et le fer et présents initialement dans le catalyseur usé, et un filtrat 1 en zone (10) ne contenant que les sels sodiques solubles de tous les métaux choisis dans le groupe formé par le vanadium, le molybdène, le tungstène et l'aluminium et présents initialement dans le catalyseur usé.

Le précipité 1 ainsi obtenu peut être avantageusement vendu par exemple à une entreprise minière spécialisée dans le traitement de la récupération desdits métaux au même titre que les minerais naturels.

<u>Deuxième processus : Traitements éventuels de la récupération des métaux choisis dans le groupe formé par le vanadium, le tungstène, le molybdène et l'aluminium et présents dans les filtrats.</u>

Le schéma récapitulatif des étapes successives éventuelles de la séparation desdits métaux est représenté sur la figure 2.

Les étapes décrites ci-dessus, à savoir les étapes b), d), e) et f) et éventuellement les étapes a) à f), sont éventuellement complétées par l'une des successions d'étapes suivantes : g), h), i), j), k), l); h), i), j), k), l).

g) Eventuellement le filtrat 1 de la zone (10) provenant de l'étape f) est d'abord mis à refroidir en zone (11) généralement à une température inférieure à la température ambiante, c'est-à-dire à une température généralement comprise entre -2 °C et 25 °C, de manière préférée à une température comprise entre la température correspondant à la limite supérieure de congélation et 15 °C, de manière encore plus préférée à une température voisine de 0 °C (0 °C ± 2 °C), de façon à obtenir une précipitation élevée et sélective de vanadium récupéré en zone (12) sous forme de précipité cristallisé d'orthovanadate de sodium (précipité 2). Le rendement maximum de la précipitation peut être obtenu par un refroidissement prolongé par exemple au moins 22 heures à une température de 0 °C pour une solution aqueuse de dissolution du gâteau sodique provenant de l'étape f) en zone (8) et ayant une densité apparente comprise entre 1,20 et 1,25.

h) Le filtrat 2 récupéré en zone (13) provenant de l'étape g) ou le filtrat 1 de la zone (10) provenant de l'étape f) est ensuite traité en zone (14) par un courant de dioxyde de carbone gazeux pour séparer l'aluminium des métaux choisis dans le groupe formé par le vanadium, le tungstène et le molybdène et présents en solution. La température du traitement de la désalumination (étape h)) est comprise entre la température ambiante (généralement entre 18 et 25 °C) et la température d'ébullition (généralement entre 100 et 105 °C), de préférence à une température comprise entre 50 °C et 100 °C et de manière encore plus préférée comprise entre 80 °C et 100 °C. Le débit de bullage du dioxyde de carbone gazeux doit correspondre au moins à la quantité stoechiométrique nécessaire à une transformation complète de la quantité d'aluminate de sodium dans la solution mise à traiter. Dans la pratique on constate par exemple qu'un débit horaire dudit gaz de 80 litres par heure permet une désalumination pratiquement totale pour le traitement d'un kilogramme de catalyseur calciné au départ, et ce pour une durée écourtée de 3 heures.

Ledit traitement de la désalumination est pratiquement achevé lorsque le pH de la solution atteint une valeur stable comprise généralement entre 9,1 et 9,2.

Dans ces conditions opératoires, la concentration de l'aluminium restant soluble atteint une valeur limite de détection par la méthode plasma, inférieure ou égale à 3 milligrammes par litre.

Le précipité blanc d'aluminium (précipité 3 récupéré en zone (16)), d'excellente filtrabilité, est identifié par la méthode de diffraction X comme étant du trihydroxyde d'aluminium $Al(OH)_3$, contenant seulement des proportions extrêmement faibles de Dowsonite ($NaAl(OH)_3CO_2$) et du mono oxy hydroxyde d'aluminium (AlOOH). D'autre part l'analyse du précipité par la méthode de fluorescence X montre que c'est un précipité d'aluminium à l'état pur, exempt de traces détectables de vanadium, de tungstène et de molybdène.

Au cours de ce traitement de la désalumination en zone (14) du filtrat 2 récupéré en zone (13) ou du filtrat 1 récupéré en zone (10), il se forme en même temps le carbonate de sodium soluble dans le filtrat 3 récupéré en zone (15) selon les réactions suivantes :

$$NaAlO_2 + CO_2 + 3H_2O \rightarrow 2Al(OH)_3 \downarrow + Na_2CO_3 \qquad (1)$$

$NaOH\,(excès) + CO_2 \rightarrow Na_2CO_3 + H_2O$ (2)

i) Le filtrat 3 de la zone (15) provenant de l'étape h) contenant du carbonate de sodium soluble est traité en zone (17) de nouveau par un bullage de dioxyde de carbone gazeux à une température comprise entre la température correspondant à la limite supérieure de congélation et la température ambiante, de préférence entre 0°C et 10°C et de manière encore plus préférée à une température voisine de 0°C (0°C ± 2°C), permettant de récupérer en zone (18) du bicarbonate de sodium peu soluble (précipité 4), par la réaction de bicarbonatation bien connue :

$$Na_2CO_3 + CO_2 + H_2O \rightleftharpoons 2HNaCO_3 \downarrow \qquad (3)$$

Sa récupération se fait très aisément en zone (18) par filtration classique type filtre büchner par exemple.

En pratique on constate par exemple que la formation maximale du précipité cristallisé de bicarbonate de sodium à l'étape i) en zone (17) est obtenue avec un débit horaire de bullage du dioxyde de carbone gazeux égal à 80 litres par heure dans le filtrat 3 récupéré en zone (15) et provenant du traitement d'un kilogramme de catalyseur calciné obtenu à l'étape b) en zone (4), et à une température maintenue constante et égale à 0°C pendant une durée de 3 heures.

Les analyses par les méthodes de fluorescence X et de diffraction X montrent que le précipité 4 obtenu en zone (18) est du bicarbonate de sodium à l'état pur. C'est donc un produit commercialement valorisable, mais si on le désire on peut le transformer éventuellement en soude caustique de façon économique selon la réaction de caustification bien connue en métallurgie :

$$(HNaCO_3/H_2O) \rightleftharpoons (Na_2CO_3/H_2O) + CO_2 \nearrow \qquad (4)$$

$(Na_2CO_3/H_2O) + Ca(OH)_2 \rightarrow (2NaOH/H_2O) + CaCO_3 \downarrow$ (5)

$$CaCO_3 \xrightarrow{\quad Air \quad} CaO \downarrow + CO_2 \nearrow \qquad (6)$$

$CaO + H_2O\ vapeur \rightarrow Ca(OH)_2 \downarrow$ (7)

- Selon le nouveau traité de chimie minérale de Paul Pascal Tome II p.908, la décomposition du bicarbonate de sodium selon la réaction [4] en carbonate de sodium est importante dès 60°C; elle est pratiquement totale à 100°C d'après les travaux de Dyer et Grantier.
- Le dioxyde de carbone gazeux récupéré des réactions [4] et [6] peut être utilisé éventuellement pour le traitement de la désalumination à l'étape h) en zone (14) et/ou à l'étape i) en zone (17) pour le traitement de la bicarbonatation.
- La solution aqueuse et concentrée de soude caustique obtenue à la réaction [5] peut être éventuellement mise à évaporer pour obtenir une masse solide humidifiée laquelle peut servir à la préparation de la pâte sodique avant le traitement de la fusion alcaline décrite précédemment à l'étape d) et effectuée en zone (6).

On a découvert que la caustification peut également se faire de manière quantitative à partir du bicarbonate de sodium obtenu à l'étape i) en zone (18) (précipité 4) selon l'invention si on effectue la réaction entre ledit bicarbonate de sodium et la chaux en présence d'eau à une température supérieure à la température ambiante et inférieure à la température d'ébullition, généralement à une température comprise entre 50°C et la température d'ébullition par exemple pour une température égale à 100°C la caustification devient totale au bout d'une heure.

j) Le filtrat 4 obtenu en zone (19) et provenant de l'étape i) est traité à l'étape j) en zone (21) pour précipiter de manière quantitative les métaux, choisis dans le groupe formé par le vanadium, le tungstène et le molybdène et présents en solution, de la manière suivante : ledit filtrat 4 est d'abord neutralisé à un pH acide de préférence à un pH compris entre 3 et 4 par une solution aqueuse concentrée d'un acide minéral (de préférence HCl) pour éliminer la quantité résiduelle de carbonate de sodium après l'opération précédente de bicarbonatation (étape i) en zone (17)) puis réajusté à un pH basique de préférence compris entre 10 et 11 par une solution aqueuse concentrée de soude caustique

pour reformer les sels sodiques des métaux choisis dans le groupe formé par le vanadium, le tungstène et le molybdène et présents en solution, avant de mettre à réagir avec une quantité d'un sel soluble de calcium correspondant à la stoechiométrie des réactions de formation des oxydes mixtes insolubles d'au moins un des composés suivants : vanadate de calcium, tungstate de calcium et molybdate de calcium, selon les réactions suivantes éventuelles :

$$Na_2CO_3(\text{résiduel}) + H^+ + Cl^- \rightarrow Na^+ + Cl^- + H_2O + CO_2\nearrow \quad (8)$$

$$\text{ions } V \text{ et} Mo + Na^+ + OH^- \rightarrow Na_2MoO_4 + NaVO_3 + H_2O \quad (9)$$

$$Na_2MoO_4 + Ca^+ + Cl^- \rightarrow Na^+ + Cl^- + CaMoO_4^* \downarrow \quad (10)$$

$$Na_2VO_3 + Ca^+ + Cl^- \rightarrow Na^+ + Cl^- + Ca_7V_4O_{17}^* \downarrow \quad (11)$$

Le précipité 5 obtenu en zone (22) est soit un des composés suivants, soit un mélange d'au moins deux des composés suivants : vanadate de calcium, tungstate de calcium et molybdate de calcium. Il peut parfaitement servir dans l'industrie sidérurgique.

Le sel soluble de calcium est l'un au moins des composés suivants : chlorure de calcium, nitrate de calcium. Parmi ces deux sels solubles de calcium, l'utilisation de chlorure de calcium est préférée, les ions nitrates étant considérés comme polluants.

k) Le filtrat 5 obtenu en zone (23) et provenant de l'étape j) est traité à l'étape k) en zones (24) et (25) de la manière décrite ci-dessous pour une élimination totale et complète des métaux résiduels solubles, choisis dans le groupe formé par le vanadium, le tungstène et le molybdène et présents initialement dans le catalyseur usé, dans le but d'obtenir une phase aqueuse exempte desdits métanx toxiques ; ledit filtrat 5 après réajustement en zone (24) à un pH acide, de préférence compris entre 2,5 et 3,5, est passé en zone (25) sur une résine complexante convenablement choisie. On constate que les groupements chélatants chimiques greffés sur un support polymérique les plus efficaces sont les suivants : un oxime, une quinoléine, ou leurs dérivés. Une rétention quasiment totale et complète des métaux résiduels, choisis dans le groupe formé par le vanadium, le tungstène et le molybdène et présents initialement dans le catalyseur usé, peut être ainsi obtenue en choisissant au moins un des groupements précédents greffé sur un support polymérique.

l) La phase aqueuse acide provenant de la zone (25) (étape k)) est enfin éventuellement neutralisée à l'étape l) en zone (26) à un pH égal à 7 par une solution aqueuse concentrée de soude caustique. Elle ne contient donc finalement que du chlorure de sodium neutre. Une méthode adéquate consiste à rejeter en mer cette solution aqueuse.

EXEMPLES

Le taux d'extraction des métaux en pourcentage poids est déterminé à partir des dosages des métaux du catalyseur avant et après extractions des métaux par la méthode de fluorescence X. Il est calculé de la manière suivante :

$$\text{Taux d'extraction} = \frac{Qi-Qf}{Qi} \text{ x } 100$$

Qi = Quantité de métal en gramme contenu dans le poids en gramme du catalyseur mis à traiter.
Qf = Quantité de métal en gramme contenu dans le poids du solide après extraction.

Le taux de la précipitation en pourcentage poids est déterminé à partir des dosages des métaux dans la solution avant et après précipitation par la méthode de plasma. Il est calculé de la manière suivante :

$$\text{Taux de précipitation} = \frac{Qav-Qap}{Qav} \text{ x } 100$$

(* identifiés par la méthode de diffraction X).

Qav = Quantité de métal en gramme contenu dans le volume de solution mis à traiter.
Qap = Quantité de métal en gramme contenu dans le volume de filtrat après séparation du précipité.

L'identification des précipités est effectuée par la méthode de diffraction X.

Les exemples suivants servent à illustrer et à montrer les avantages de la mise en pratique du procédé de la présente invention, mais ils ne doivent pas être considérés comme étant limitatifs.

Origines et caractéristiques des catalyseurs

On traite deux catalyseurs usés, un catalyseur A ayant une granulométrie moyenne comprise entre 500 et 1000 micromètres et un catalyseur B sous forme de billes de diamètre compris entre 0,9 et 1 millimètre, retirés d'un réacteur à lit fixe servant à une opération industrielle d'hydrotraitement d'une charge lourde de pétrole à Koweit et en Afrique du Sud.

Les caractéristiques des catalyseurs déhuilés sont indiquées dans le tableau I ci-après, colonne 1.

TABLEAU I

| Teneurs en % poids | Catalyseur usé et déhuilé | | Catalyseur déhuilé et calciné; Air ; 500 °C. | |
|---|---|---|---|---|
| | Cata A1 | Cata B1 | Cata A2 | Cata B2 |
| Nickel | 1,84 | 4,82 | 2,47 | 6,34 |
| Vanadium | 7,51 | 10,35 | 10,23 | 13,60 |
| Cobalt | 1,27 | 0 | 1,80 | 0 |
| Molybdène | 4,03 | 4,29 | 5,90 | 5,63 |
| Aluminium | 20,01 | 23,37 | 29,78 | 30,70 |
| Soufre | 10,70 | 14,90 | 1,82 | 2,17 |
| Carbone | 26,00 | 12,40 | ≦ 01 | ≦ 0,10 |
| | Colonne 1 | | Colonne 2 | |

EXEMPLE 1

On étudie l'influence de la température de calcination d'un catalyseur déhuilé (catalyseur B1. tableau I colonne 1) par de l'air (étape b)) en vue d'obtenir une conversion chimique maximale des oxydes métalliques choisis dans le groupe constitué par l'aluminium, le vanadium et le molybdène avec la soude caustique en fusion (étape d)) en sels sodiques solubles (étape e)) lors de la dissolution aqueuse du gâteau sodique obtenu à l'étape d), les métaux choisis dans le groupe formé par le nickel et le cobalt restant insolubles.

**Conditions expérimentales :**

| | | |
|---|---|---|
| Catalyseur B1 (fraction ≦ 500 micromètres) | | = 100 grammes |
| Calcination air : | température<br>Débit horaire<br>Durée | = 500 °C ou 800 °C<br>= 60 litres<br>= 5 heures |
| Eau permutée utilisée pour former la pâte sodique<br>Cuisson sodique : | <br>Température<br>Durée | = 45 millilitres<br>= 370-375 °C<br>= 1 heure |
| Dissolution aqueuse du gâteau sodique résultant : | Volume d'eau<br>Température | = 500 millilitres<br>= 100 °C |

Les résultats sont donnés dans le tableau II.

La calcination d'un catalyseur usé après déhuilage par de l'air (étape b)) doit donc être effectuée à une température inférieure à celle de la transformation allotropique de l'alumine gamma en alumines supérieures (bêta et/ou alpha) plus réfractaires, de préférence à une température ne dépassant pas 500 °C par exemple pour obtenir une conversion chimique maximale de l'alumine gamma réactive du support dudit catalyseur avec la soude caustique à l'état fondu en aluminate de sodium (étape d)), soluble par de l'eau à l'étape suivante (étape e)).

TABLEAU II

| | Température de calcination (°C) | Produits insolubles-eau (% poids FX.) | | | | | Réaction avec NaOH en fusion(1) (% poids) | | | | |
|---|---|---|---|---|---|---|---|---|---|---|---|
| | | Ni | Co | V | Mo | Al | Ni(2) | Co(2) | V | Mo | Al |
| Catalyseur B1 | 500 | 24,11 | 11,90 | ≤ 0,1 | ≤ 0,1 | 8,57 | 0 | 0 | 100 | 100 | 96,3 |
| | 800 | 7,35 | 3,67 | ≤ 0,1 | ≤ 0,1 | 28,10 | 0 | 0 | 100 | 100 | 72,47 |
| Support Alumine vierge de catalyseur (comparaisons) | 500 | - | - | - | - | 0 | - | - | - | - | 100 |
| | 800 | - | - | - | - | 24,85 | - | - | - | - | 76,15 |

1. Pourcentages déterminés à partir des teneurs des métaux dans le poids du catalyseur calciné avant le traitement de fusion alcaline et dans le poids des insolubles après la dissolution aqueuse du gâteau sodique résultant.

2. Les dosages de nickel et de cobalt effectués dans le filtrat aqueux après filtration du précipité insoluble par la méthode de plasma indiquent que les concentrations desdits métaux solubles sont égales ou inférieures à 1 milligramme par litre (limite de détection).

EXEMPLE 2

On montre qu'il est préférable de procéder à un broyage préalable du catalyseur calciné provenant de l'étape b) en poudre fine (étape c)) avant le traitement de fusion alcaline (étape d)) avec la soude caustique en fusion. Les conditions opératoires de calcination par l'air du catalyseur déhuilé (catalyseur B2 - tableau I - colonne 2), du traitement de cuisson sodique et de la dissolution aqueuse du ga'teau sodique sont les mêmes que celles indiquées dans l'exemple 1. Les résultats sont donnés dans le tableau III.

## TABLEAU III

| Granulométrie | | Alumine dissoute* (% poids) | Poids insoluble (g) | % poids (FX) | |
|---|---|---|---|---|---|
| | | | | Ni | Al |
| Bille $\phi$ moyen : 0,9 à 1 millimètre | Cata B2 (100 g) | 72 | 26,46 | 21,09 | 38,74 |
| | Support alumine vierge | 75 | 25 | - | - |
| Poudre fine : ≤ 500 micromètres | Cata B2 (100 g) | 96,5 | 12,25 | 45,52 | 8,78 |
| | Support alumine vierge | 100 | 0 | - | - |

(*) Pourcentages déterminés à partir des dosages des métaux dans le volume du filtrat basique par la méthode de plasma et des teneurs de l'aluminium contenu dans 100 grammes de catalyseur calciné, et du support d'alumine vierge mis à traiter au départ.

EXEMPLE 3

On étudie l'influence du rapport pondéral soude caustique/catalyseur calciné à l'étape de traitement de la fusion alcaline (étape d)). Plusieurs essais de cuisson sodique ont été effectués dans les mêmes conditions opératoires que celles indiquées dans l'exemple 1. Les résultats sont donnés dans le tableau IV.

TABLEAU IV

| Quantité mise à traiter = 100 g ≦ 500 micromètres | Rapport pondéral NaOH/cata. | Poids insoluble (g) | Alumine dissoute (% poids) |
|---|---|---|---|
| Catalyseur A1 (tableau I -colonne 1) | 0,5875 | 35,10 | 48,27 |
| | 0,8810 | 21,70 | 72,09 |
| | 1,175 | 13,11 | 96,30 |
| | 1,570 | 12,90 | 97,20 |
| Support alumine vierge du catalyseur (comparaison) | 0,5875 | 25,00 | 75,00 |
| | 1,175 | 0 | 100 |
| | 1,570 | 0 | 100 |

La formation maximale de l'aluminate de sodium soluble par de l'eau à l'étape suivante (étape e)) entre la poudre d'alumine du support d'un catalyseur déhuilé et calciné (étapes a), b), c)) et la soude caustique en fusion à l'étape d) peut être pratiquement obtenue avec un rapport pondéral soude caustique/catalyseur se situant autour d'une valeur comprise entre 1,17 et 1,20.

EXEMPLE 4

On détermine la zone de température de cuisson sodique adéquate (étape d)) pour obtenir une conversion maximale des métaux choisis dans le groupe constitué par le vanadium, le molybdène et l'aluminium du catalyseur en sels sodiques solubles par de l'eau à l'étape suivante (étape e)) :
Les essais consignés dans le tableau V ont été effectués avec 100 grammes de poudre de catalyseur calciné (catalyseur B1 fraction ≦ 500 micromètres - tableau I - colonne 1) dans les mêmes conditions opératoires indiquées dans l'exemple 1.

| Essai | Température de cuisson sodique (°C) | Rendements des aluminates métalliques (% poids) | | | | |
|---|---|---|---|---|---|---|
| | | Ni | Co | Al | Mo | V |
| E1 | 330-335 | 0 | 0 | 91,8 | 100 | 100 |
| E2 | 370-375 | 0 | 0 | 96,3 | 100 | 100 |
| E3 | 405-410 | 0 | 0 | 96,5 | 100 | 100 |
| E4 | 440-450 | 0 | 0 | 96,1 | 100 | 100 |

Il est donc avantageux de la limiter à une température ne dépassant pas celle de l'essai E2 par exemple.

EXEMPLE 5

On reproduit cinq opérations de cuisson sodique (étape d)) du catalyseur B2 (tableau I - colonne 2) dans les conditions opératoires identiques à celles indiquées pour l'essai E2 de l'exemple 4 et on étudie l'influence de la quantité d'eau permutée utilisée pour la dissolution du gâteau sodique résultant sur le taux de la précipitation du vanadate de sodium à l'étape g) par refroidissement du filtrat 1 obtenu en zone (11) après fltration des insolubles (précipité 1) à l'étape f).

Les résultats sont donnés dans le tableau VI.

| Essai | Volume d'eau permutée utilisée pour la dissolution du gâteau sodique (ml) | Refroidissement[1] (°C) | Taux de précipitation[2] de vanadium (% poids) |
|---|---|---|---|
| E5 | 400 | 14-15 | 89,6 |
| E6 | 500 | 14-15 | 88,4[3] |
| E7 | 750 | 14-15 | 25,9 |
| E8 | 1000 | 14-15 | ≦ 2-3 |
| E9 | 500 | 0 | 92,4 |

1. Durée de refroidissement : 5 heures sauf pour l'essai 9 avec un refroidissement prolongé de 16 heures.
2. Pourcentages déterminés à partir des dosages de vanadium soluble dans la solution avant et après précipitation dudit métal par la méthode de plasma.
3. Identification du précipité après recristallisation, lavage à l'alcool éthylique et séchage à 50°C pendant 5 heures sous vide par la trompe à eau (environ 15 cm Hg) par la méthode de diffraction X : mélange de vanadate de sodium hydraté et contenant une petite quantité de boehmite, $Na_3VO_4$, $12H_2O$ (orthovanadate de sodium, principal constituant) + $NaVO_3$, $xH_2O$ + $Na_6V_2O_7$, $14H_2O$ + $Na_4V_2O_7$, x $H_2O$ + $Al(OH)_3$.

Les résultats du tableau VI montrent que d'une part la quantité d'eau adéquate pour dissoudre le gâteau sodique (étape e)) provenant de l'étape d) et pour obtenir une précipitation élevée de vanadate de sodium (étape g)) est de 500 millilitres (essais 6 et 9); autrement dit le rapport quantité d'eau (litre)/gâteau sodique provenant de la cuisson sodique de la poudre du catalyseur calciné (kilogramme) ne doit pas dépasser une valeur voisine de 5.

D'autre part le taux de la précipitation du vanadate de sodium est plus élevé (essai 9) si le refroidissement du filtrat 1 obtenu en zone (10) est à la fois effectué à une basse température (égale à 0°C par exemple) et une durée prolongée (de 16 heures par exemple).

On a constaté également que si ledit rapport est inférieur à 5, par exemple égal à 4 (essai 5), la séparation par filtration de la masse abondante et volumineuse des cristaux hydratés de vanadate de sodium précipité (précipité 2) s'avère être nettement moins aisée et conduit à une perte importante de filtrat 2 récupéré en zone (13) donc par conséquent à une perte plus importante des métaux restants solubles choisis dans le groupe formé par le molybdène et l'aluminium.

EXEMPLE 6

On procéde à un traitement de la désalumination (étape h) en zone (14)) de 400 millilitres de filtrat 2 récupéré en zone (13) et provenant de l'essai E6 de l'exemple 5, par un bullage de dioxyde de carbone gazeux à la température d'ébullition dudit filtrat et un débit horaire dudit gaz égal à 60 litres par heure pendant 3 heures.

Les résultats sont donnés dans le tableau VII.

TABLEAU VII

| | Solution métallique (g/l) | | | Taux de précipitation (% pds) | | |
|---|---|---|---|---|---|---|
| | V | Mo | Al | V | Mo | Al |
| Solution avant précipitation | 2,38 | 11,80 | 55,24 | - | - | - |
| Filtrat après[1] précipitation | 2,48 | 12,21 | ≦ 5 mg/l | ≃ 0 | ≃ 0 | ≃ 100[2] |

1. Volume du filtrat recueilli = 386 millilitres après flltration du précipité d'aluminium entre 70 et 80°C.
2. Résultats de l'analyse par la méthode de diffraction X du précipité après lavage aqueux jusqu'à pH neutre et étuvage à 150°C pendant 5 heures : trihydroxyde d'aluminium ($Al(OH)_3$) contenant une très petite quantité de dowsonite ($NaAlCO_3(OH)_2$).

Cette méthode de la désalumination du filtrat 2 récupéré en zone (13) selon l'invention permet donc une récupération séparée de manière totale et sélective de l'aluminium précipité (précipité 3 récupéré en zone (16)) et les sels sodiques des métaux choisis dans le groupe formé par le vanadium et le molybdène restent pratiquement solubles dans la solution basique.

EXEMPLE 7

On traite 300 millilitres du filtrat 3 récupéré en zone (15) à l'étape i) en zone (17) et provenant de l'essai de désalumination de l'exemple 6 également par un bullage de dioxyde de carbone gazeux mais à une basse température égale à 0 °C et un débit horaire dudit gaz égal à 60 titres par heure pendant 3 heures, pour précipiter le carbonate de sodium soluble formé au cours de la désalumination à l'étape précédente (étape h) en zone (14)) en un précipité (précipité 4 récupéré en zone (18)) de bicarbonate de sodium peu soluble.

Les résultats sont donnés dans le tableau VIII.

## TABLEAU VIII

| | Quantité de(*) HCl utilisée (mole) | Résultats de l'analyse par la méthode de diffraction X du précipité obtenu |
|---|---|---|
| Solution avant précipitation | 1,055 | **Mélange :** |
| Solution après précipitation | 0,284 | $HNaCO_3$ (Quantité prédominantes)<br>$HNa_3(CO_3)_2$, $2H_2O$<br>$Na_2CO_3$,x $H_2O$ |
| Taux de précipitation (% poids) = 73-74 | | |

(*) Rédaction de dosage : $Na_2CO_3$, x $H_2O$ + HCl ⟶ NaCl + $CO_2$↗ + $H_2O$.
(3 % poids) est effectuée jusqu'à cessation totale de dégagement de dioxyde de carbone gazeux, correspondant, généralement à un pH voisin de 3.

Cet exemple montre donc qu'on peut récupérer une quantité importante (environ deux tiers) de carbonate de sodium soluble sous forme de bicarbonate de sodium précipité de façon économique ; ceci permet en outre d'éviter une consommation importante d'acide chlorhydrique nécessaire à une élimination préalable de la totalité du carbonate de sodium soluble dans le filtrat 4 récupéré en zone (19) avant le traitement calcique à l'étape suivante (étape j) en zone (21)) qui permet de récupérer les métaux choisis dans le groupe formé par le vanadium et le molybdène.

EXEMPLE 8

Cet exemple a pour but de montrer que l'on peut précipiter quasiment quantitativement les métaux solubles choisis dans le groupe formé par le vanadium et le molybdène du filtrat 4 récupéré en zone (19) et provenant de l'essai de bicarbonatation de l'exemple 7.

On fait réagir ledit filtrat avec le chlorure de calcium en solution aqueuse concentrée après deux ajustements successifs du pH, d'abord à 3 puis à 11 par une solution aqueuse concentrée d'acide

chlorhydrique et de soude caustique :

| | |
|---|---|
| Température de réaction | 25 °C |
| Durée de réaction | 1 heure |

Les résultats sont donnés dans le tableau IX.

## TABLEAU IX

| | Concentration (g/l) | | Taux de précipitation |
|---|---|---|---|
| | Vanadium | Molybdène | (% poids) |
| Solution avant précipitation | 2,32 | 11,52 | Vanadium $\simeq$ 100 |
| Solution après précipitation | $\leq$ 10 mg/l | 0,12 | Molybdène = 99-99,1 |
| Résultats de l'analyse par la méthode de diffraction X du précipité 5 : Ca $MoO_4$ + $Ca_7V_4O_{17}$ + $Ca_2V_2O_7$ * | | | |

(*) Espèce minoritaire.

La précipitation par les ions calcium des métaux, choisis dans le groupe formé par le vanadium et le molybdène et présents dans une solution aqueuse basique sous forme de sels sodiques, s'avère donc être une méthode très efficace pour la récupération desdits métaux. La solution aqueuse de chlorure de calcium utilisée comme réactif de précipitation peut être obtenue de façon économique par réaction entre la chaux et l'acide chlorhydrique.

EXEMPLE 9

On montre dans cet exemple que les quantités résiduelles de vanadium et de molybdène restant solubles dans le filtrat 5 récupéré en zone (23) et provenant de l'essai décrit dans l'exemple 8 peuvent être captées sur une résine complexante convenablement choisie (étape k) en zone (25)). On fait circuler en continu ledit filtrat après ajustement du pH à une valeur sensiblement égale à 3 en zone (24) par une solution aqueuse concentrée d'acide chlorhydrique, à travers une colonne contenant la résine DUOLITE ES 346 (fonction amidoxime greffée sur un squelette polystyrénique macroporeux) :

| | |
|---|---|
| Température | 25 °C |
| Débit de pompage | 5 litres par heure |
| Volume de filtrat acidifié | 350 millilitres |
| Résine DUOLITE ES 346 | 50 grammes* |
| Durée de pompage | 2 heures |

(*) La résine commerciale étant préalablement conditionnée avec une solution aqueuse diluée d'acide chlorhydrique jusqu'à un pH de la solution constant et égal à 3.

Les résultats sont donnés dans le tableau X.

TABLEAU X

| | Concentation (mg/l) | |
|---|---|---|
| | Vanadium | Molybdène |
| Solution avant passage sur résine complexante | ≦ 10 | 120 |
| Solution après passage sur résine complexante | ≦ 1(*) | ≦ 2(*) |

(*) limites de détection par la méthode plasma.

La solution aqueuse acide ainsi quasiment débarrassée des métaux toxiques choisis dans le groupe formé par le vanadium et le molybdène est neutralisée à l'étape l) en zone (26) par une solution aqueuse concentrée de soude caustique jusqu'à un pH égal à 7. La solution aqueuse finale ne contenant que du chlorure de sodium neutre peut donc être rejetée sans risque de pollution par exemple en mer.

EXEMPLE 10

Cet exemple montre que l'on peut transformer quantitativement le précipité de bicarbonate de sodium (précipité 4 récupéré en zone (18)) en soude caustique de façon économique par interaction chimique avec la chaux selon la réaction de caustification bien comme en métallurgie :

$$HNaCO_3 + Ca(OH)_2 \rightarrow NaOH + H_2O + CaCO_3 \downarrow$$

(réaction [6] de la description)

| | |
|---|---|
| Bicarbonate de sodium | = 84 grammes (1 mole) |
| Di hydroxyde de calcium | = 74,09 grammes (mole) |
| Volume d'eau permutée | = 200 millilitres |
| Température de réaction | = 100 ° C |
| Durée de réaction | = 2 heures |

Le précipité blanc séparé par filtration, après lavage par de l'eau permutée jusqu'à un pH neutre et après étuvage à 150 ° C pendant 3 heures, est du carbonate de calcium pur selon l'analyse par la méthode de diffraction X.

La solution aqueuse basique de soude caustique régénérée a une densité apparente égale à 1,177.

La présence des ions calcium n'est pas détectée dans la phase aqueuse basique après réaction par la méthode de plasma.

La neutralisation de 50 millilitres de la solution aqueuse de soude caustique ainsi régénérée nécessite 60,80 millilitres d'une solution aqueuse concentrée d'acide chlorhydrique titrant 30 % poids, ce qui correspond, aux erreurs expérimentales près, à la stoechiomètrie de la réaction de caustification.

**Revendications**

**1.** Procédé de traitement antipollution et de récupération des métaux d'un catalyseur de raffinage d'une charge pétrolière, lequel catalyseur, à support à base d'au moins une alumine, a été désactivé et contient du carbone, au moins un métal choisi dans le groupe formé par le nickel, le cobalt et le fer, et au moins un métal choisi dans le groupe formé par le vanadium, le tungstène et le mobybdène; le procédé étant tel qu'il comprend les étapes successives suivantes :

1) on calcine le catalyseur en présence d'un gaz renfermant de l'oxygène moléculaire à une température ne dépassant pas 600 ° C,

2) on soumet ledit mélange solide à un traitement thermique en présence de soude caustique à une température comprise entre 350 et 400 ° C,

3) on met en contact la masse solide obtenue en 2) avec de l'eau permutée à une température comprise entre la température ambiante et la température d'ébullition, la densité de la solution aqueuse résultante étant comprise entre 1 et 1,5, ce qui conduit à l'obtention d'une solution hétérogène,

4) on filtre la solution hétérogène obtenue en 3), récupérant ainsi un précipité constitué essentiellement des métaux insolubles choisis dans le groupe formé par le nickel, le cobalt et le fer et présents initialement dans le catalyseur usé, et un filtrat ne contenant que les sels sodiques solubles de tous les métaux choisis dans le groupe formé par le vanadium, le tungstène, le mobybdène et présents initialement dans le catalyseur usé.

**2.** Procédé selon la revendication 1 dans lequel, préalablement aux étapes 1) à 4), on soumet le catalyseur usé à un strippage par solvant pour éliminer l'huile adhérente.

**3.** Procédé selon les revendications 1 ou 2 dans lequel, à l'issue de l'étape 4), on procède aux étapes suivantes dans le cas où au moins un métal choisi dans le groupe formé par le vanadium, le tungstène et le molybdène est présent :

5) On refroidit le filtrat provenant de l'étape 4) à une température généralement comprise entre -2 et 25 ° C.

6) Le filtrat provenant de l'étape 5) est désaluminé par un courant de dioxyde de carbone gazeux à une température comprise entre la température ambiante et la température d'ébullition, avec précipitation d'aluminium et production du carbonate de sodium.

7) Le filtrat provenant de l'étape 6) est traité par un bullage de dioxyde de carbone gazeux à une température comprise entre la température correspondant à la limite supérieure de congélation et la température ambiante, transformant le carbonate de sodium en bicarbonate de sodium peu soluble.

8) Les sels sodiques solubles de tous les métaux, choisis dans le groupe formé par le vanadium, le tungstène, le molybdène et l'aluminium et présents initialement dans le catalyseur usé, sont précipités à partir de la solution obtenue à l'étape 7) par réaction avec un sel soluble de calcium.

**4.** Procédé selon l'une des revendications 1 ou 2 tel que, à l'issue de l'étape 4), on procède aux étapes suivantes dans le cas où au moins un métal choisi dans le groupe formé par le vanadium, le tungstène et le molybdène est présent :

5) Le filtrat provenant de l'étape 4) est désaluminé par un courant de dioxyde de carbone gazeux à une température comprise entre la température ambiante et la température d'ébullition, avec précipitation d'aluminium et production du carbonate de sodium.

6) le filtrat provenant de l'étape 5) est traité par un bullage de dioxyde de carbone gazeux à une température comprise entre la température correspondant à la limite supérieure de congélation et la température ambiante, transformant le carbonate de sodium en bicarbonate de sodium peu soluble.

7) Les sels sodiques solubles de tous les métaux, choisis danse le groupe formé par le vanadium, le tungstène, le molybdène et l'aluminium et présents initialement dans le catalyseur usé, sont précipités à partir de la solution obtenue à l'étape 6) par réaction avec un sel soluble de calcium.

**5.** Procédé selon l'une des revendications 3 ou 4 tel que la solution obtenue à l'étape 8) de la revendication 3 ou à l'étape 7) de la revendication 4 est passée sur une résine complexante.

**6.** Procédé selon la revendication 5 tel que la résine complexante comporte au moins une fonction choisie dans le groupe constitué par l'oxime, la quinoléine, les dérivés de l'oxime et les dérivés de la quinoléine.

**7.** Procédé selon l'une des revendications 5 ou 6 tel que la solution obtenue après passage sur une résine complexante est rejetée en mer après neutralisation.

**8.** Procédé selon l'une des revendications 3 à 7 tel que le sel de calcium utilisé à l'étape 8) de la revendication 3 ou à l'étape 7) de la revendication 4 est choisi dans le groupe formé par le chlorure de calcium et le nitrate de calcium.

**9.** Procédé selon l'une des revendications 1 à 8 tel que l'étape 2) comporte de plus un traitement préalable d'humidification du catalyseur calciné obtenu à l'étape 1).

**10.** Procédé selon la revendication 9 tel que le traitement préalable d'humidification se fait grâce à une quantité minimale d'eau comprise entre 300 et 350 millilitres par kilogramme de catalyseur calciné.

**11.** Procédé selon l'une des revendications 1 à 10 tel que l'on soumet en outre le catalyseur calciné provenant de l'étape 1) à un broyage en granulométrie fine avec une limite supérieure de granulométrie égale à 2000 micromètres avant de procéder à l'étape 2).

## Claims

**1.** Process for the antipollution treatment and the recovery of metals from a refining catalyst of a petroleum charge, said catalyst, with a support based on at least one alumina, having been deactivated and containing carbon, at least one metal chosen from within the group formed by nickel, cobalt and iron, and at least one metal chosen from within the group constituted by vanadium, tungsten and molybdenum ; said process being characterized in that it comprises the following steps :

1) during a first stage said catalyst is calcined in the presence of a gas containing molecular oxygen at a temperature not exceeding 600° C ;

2) during a second stage the catalyst undergoes a heat treatment in the presence of caustic soda at a temperature between 350 and 450° C,

3) the compact solid mass obtained in stage 2) is contacted with soft water at a temperature between ambient temperature and the boiling temperature, the density of the resulting aqueous solution being between 1 and 1.5, so that an heterogeneous solution is obtained,

4) the heterogeneous solution obtained in stage 3) is filtered, thus recovering a precipitate essentially constituted by insoluble metals chosen from within the group formed by nickel, cobalt and iron and initially present in the spent catalyst, and a filtrate only containing soluble sodium salts of all the metals chosen from within the group formed by vanadium, tungsten, molybdenum and aluminum and initially present in the spent catalyst.

**2.** Process according to claim 1 wherein, prior to stages 1) to 4), the spent catalyst undergoes a stripping by a solvent to eliminate the adhering oil.

**3.** Process according to one of the claims 1 or 2, characterized in that, following stage 4), the following stages are performed in the case where at least one metal chosen from among vanadium, tungsten and molybdenum is present :

5) the filtrate from stage 4) is cooled to a temperature generally between -2 and 25° C ;

6. the filtrate from stage 5) is dealuminated by a gaseous carbon dioxide flow at a temperature between ambient temperature and boiling temperature, with precipitation of aluminium and production of sodium carbonate ;

7) the filtrate from stage 6) is treated by gaseous carbon dioxide bubbling at a temperature between that corresponding to the upper freezing limit temperature and ambient temperature, transforming the sodium carbonate into relatively insoluble sodium bicarbonate ;

8) the soluble sodium salts of all the metals chosen from within the group formed by vanadium, tungsten, molybdenum and aluminium and initially present in the spent catalyst are precipitated from the solution obtained in stage 7) by reacting with a soluble calcium salt.

**4.** Process according to one of the claims 1 or 2, characterized in that, following stage 4), the following stages are performed in the case where at least one metal chosen from the group formed by vanadium, tungsten and molybdenum is present :

5 ) the filtrate from stage 4) is dealuminated by a gaseous carbon dioxide flow at a temperature between ambient temperature and boiling temperature, with precipitation of aluminium and production of sodium carbonate ;

6) the filtrate from stage 5) is treated by gaseous carbon dioxide bubbling at a temperature between that corresponding to the upper freezing limit temperature and ambient temperature, transforming the sodium carbonate into relatively insoluble sodium bicarbonate ;

7) the soluble sodium salts of all the metals chosen from within the group formed by vanadium, tungsten, molybdenum and aluminium and initially present in the spent catalyst are precipitated from the solution obtained in stage 6) by reaction with a soluble calcium salt.

**5.** Process according to one of the claims 3 or 4, characterized in that the solution obtained in stage 8) of claim 3 or stage 7) of claim 4 is passed through a complexing resin.

6. Process according to claim 5, characterized in that the complexing resin has at least one function chosen from within the group constituted by oxime, quinoline, oxime derivatives and quinoline derivatives.

7. Process according to one of the claims 5 or 6, characterized in that the solution obtained after passing ghrough a complexing resin is discharged into the sea after neutralization.

8. Process according to one of the claims 3 to 7, characterized in that the calcium salt used in stage 8) of claim 3 or stage 7 of claim 4 is chosen from within the group formed by calcium chloride and calcium nitrate.

9. Process according to one of the claims 1 to 8, characterized in that the second stage involves a prior humidification treatment of the solid mixture obtained in stage 1).

10. Process according to claim 9, characterized in that the prior humidification treatment takes place with a minimum water quantity between 300 and 3500 millilitres/kilogram of calcined catalyst.

11. Process according to one of the claims 1 teo 10, wherein the calcined catalyst from stage 1) is ground to a fine grain size with an upper grain size limit of 2000 micrometers before carrying out stage 2).

## Patentansprüche

1. Verfahren zur Reinigung und Wiedergewinnung von Metallen eines Raffinierungskatalysators für Benzineinsatzstoffe, wobei dieser Katalysator auf einem Träger auf der Grundlage von mindestens einem Aluminat, desaktiviert ist und Kohlenstoff, mindestens ein Metall, das aus der von Nickel, Kobalt und Eisen gebildeten Gruppe gewählt wird und mindestens ein Metall, das aus der von Vanadium, Wolfram und Morybdän gebildeten Gruppe gewählt wird, enthält; wobei das Verfahren die folgenden Schritte umfaßt:
   1) der Katalysator wird in Gegenwart eines Gases, das molekularen Sauerstoff enthält, bei einer Temperatur, die 600 °C nicht überschreitet, calciniert,
   2) das besagte feste Gemisch wird einer thermischen Behandlung in Gegenwart von Ätznatron bei einer Temperatur zwischen einschließlich 350 und 400 °C unterzogen,
   3) die in 2) erhaltene feste Masse wird bei einer Temperatur zwischen einschließlich Raumtemperatur und Siedetemperatur mit entsalztem Wasser in Verbindung gebracht, wobei die Dichte der resultierenden Lösung zwischen einschließlich 1 und 1,5 liegt und dieser Vorgang eine heterogene Lösung ergibt
   4) die in 3) erhaltene, heterogene Lösung wird abfiltriert und auf diese Weise ein Niederschlag erhalten, der hauptsächlich aus unlöslichen Metallen aus der von Nickel, Cobalt und Eisen gebildeten Gruppe besteht, die ursprünglich im gebrauchten Katalysator enthalten waren und ein Filtrat, das nur lösliche Natriumsalze von allen Metallen der von Vanadium, Wolfram und Molybdän gebildeten Gruppe enthält, die ursprünglich im gebrauchten Katalysator enthalten waren.

2. Verfahren nach Anspruch 1, bei dem vor den Schritten 1) bis 4) der gebrauchte Katalysator mit einem Lösungsmittel extrahiert wird, um anhaftendes Öl zu entfernen.

3. Verfahren nach den Ansprüchen 1 oder 2, bei dem nach dem Schritt 4) die folgenden Schritte durchgeführt werden, falls mindestens ein Metall aus der von Vanadium, Wolfram und Molybdän gebildeten Gruppe zugegen ist:
   5) das aus Schritt 4 stammende Filtrat wird auf eine Temperatur von im allgemeinen zwischen einschließlich -2 und 25 °C abgekühlt.
   6) Das aus Schritt 5) stammende Filtrat wird vom Aluminat durch einen Strom von gasförmigen Kohlenstoffdioxid bei einer Temperatur zwischen einschließlich Raumtemperatur und Siedetemperatur befreit, wobei Aluminium ausfällt und Natriumcarbonat entsteht.
   7) Das aus Schritt 6 stammende Filtrat wird unter Durchblasen mit gasförmigem Kohlenstoffdioxid behandelt, bei einer Temperatur, die zwischen der oberen Erstarrungsgrenze und Raumtemperatur liegt, wobei das Natriumcarbonat zu schlecht löslichem Natriumbicarbonat reagiert.
   8) Die löslichen Natriumsalze aller Metalle, die aus der von Vanadium, Wolfram, Molybdän und Aluminium gebildeten Gruppe gewählt wurden und ursprünglich im gebrauchten Katalysator enthalten waren, werden aus der in Schritt 7) erhaltenen Lösung durch eine Reaktion mit einem löslichen Calciumsalz ausgefällt.

**4.** Verfahren nach einem der Ansprüche 1 oder 2, bei dem nach dem Schritt 4) die folgenden Schritte durchgeführt werden, falls mindestens ein Metall aus der von Vanadium, Wolfram und Molybdän gebildeten Gruppe zugegen ist:

5) aus dem Filtrat aus Schritt 4) wird durch einen Strom von gasförmigen Kohlenstoffdioxid bei einer Temperatur zwischen einschließlich Raumtemperatur und Siedetemperatur das Aluminium durch Ausfällen von Aluminium und Bildung von Natriumcarbonat entfernt.

6) Das aus Schritt 5) stammende Filtrat wird unter Durchblasen mit einem Strom von gasförmigem Kohlenstoffdioxid behandelt, bei einer Temperatur, die zwischen der oberen Erstarrungsgrenze und Raumtemperatur liegt, wobei das Natriumcarbonat izu sclech löslichem Natriumbicarbonat reagiert.

7) Die löslichen Natriumsalze aller Metalle, die aus der von Vanadium, Wolfram, Molybdän und Aluminium gebildeten gebildeten Gruppe gewählt wurden und ursprünglich im gebrauchten Katalysator enthalten waren, werden aus der in Schritt 6) erhaltenen Lösung durch eine Reaktion mit einem löslichen Calciumsalz ausgefällt.

**5.** Verfahren nach einem der Ansprüche 3 oder 4, bei dem die in Schritt 8) des Anspruchs 3 oder in Schritt 7) des Anspruchs 4 erhaltene Lösung durch ein komplexierendes Harz gegeben wird.

**6.** Verfahren nach Anspruch 5, bei dem das komplexierende Harz mindestens eine Funktion aus der von Oxim, Chinolin, den Oximderivaten und den Chinolinderivaten gebildeten Gruppe umfaßt.

**7.** Verfahren nach einem der Ansprüche 5 oder 6, bei dem die nach dem Durchgang durch ein komplexierendes Harz erhaltene Lösung nach der Neutralisation in das Meer entsorgt wird.

**8.** Verfahren nach einem der Ansprüche 3 bis 7, bei dem das in Schritt 8) des Anspruchs 3 oder in Schritt 7 des Anspruchs 4 verwendete Calciumsalz aus der von Calciumchlorid und Calciumnitrat gebildeten Gruppe gewählt wird.

**9.** Verfahren nach einem der Ansprüche 1 bis 8, bei dem Schritt 2) zusätzlich als Vorbehandlung ein Befeuchten des in Schritt 1) erhaltenen calcinierten Katalysators umfaßt.

**10.** Verfahren nach Anspruch 9, bei dem die vorhergehende Befeuchtung mit einer minimalen Menge Wassers von einschließlich 300 und 350 Milliliter pro Kilogramm calciniertem Katalysator durchgeführt wird.

**11.** Verfahren nach einem der Ansprüche 1 bis 10, bei dem man außerdem den in Schritt 1) erhaltenen calcinierten Katalysator einer Zerkleinerung zu feinem Granulat, mit einer Obergrenze der Granulatgröße von 2000 Micrometer, unterzieht, bevor Schritt 2) durchgeführt wird.

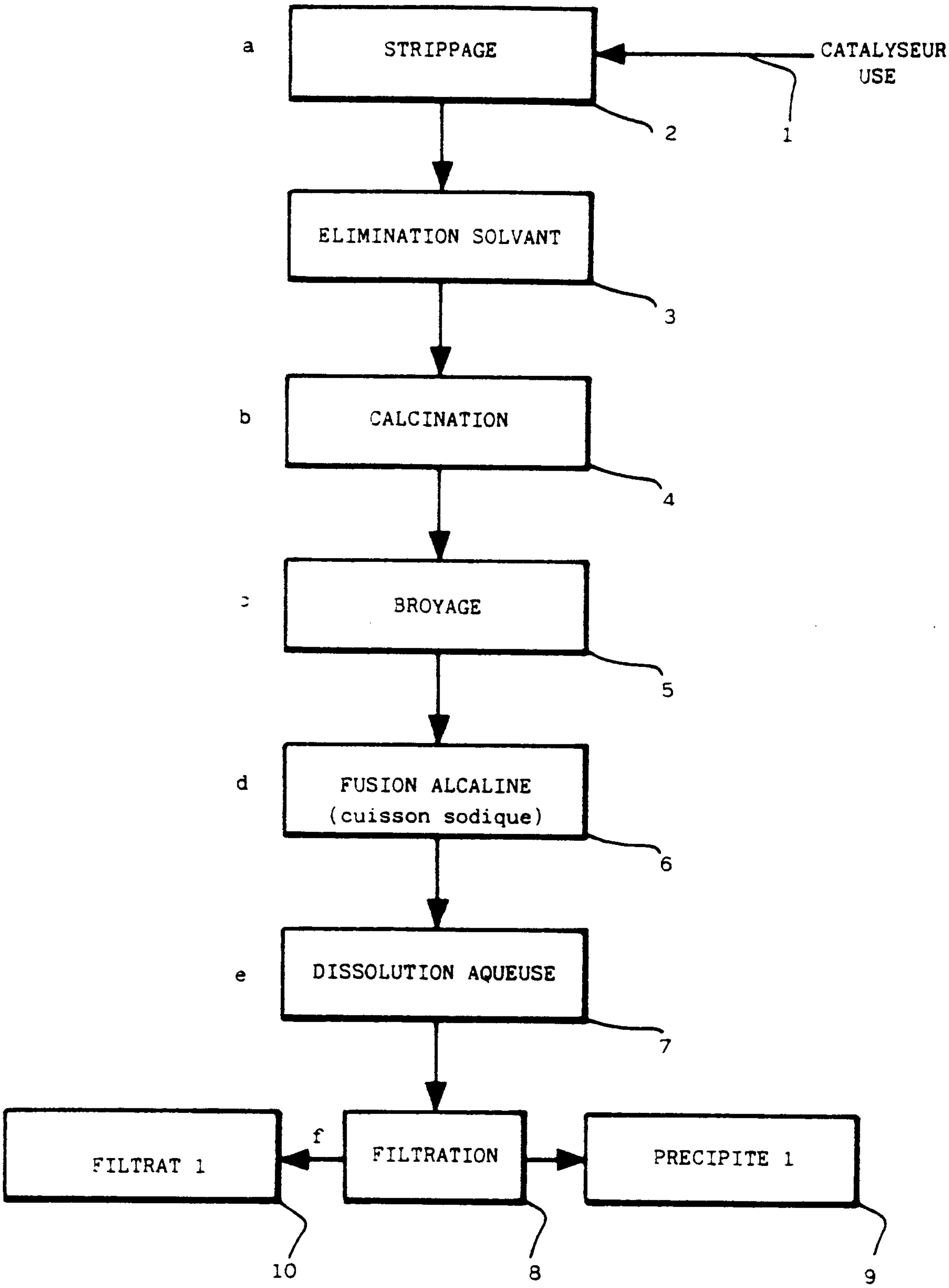
a
STRIPPAGE
CATALYSEUR USE
2
1
ELIMINATION SOLVANT
3
b
CALCINATION
4
c
BROYAGE
5
d
FUSION ALCALINE
(cuisson sodique)
6
e
DISSOLUTION AQUEUSE
7
FILTRAT 1
f
FILTRATION
PRECIPITE 1
10
8
9

FIGURE 1

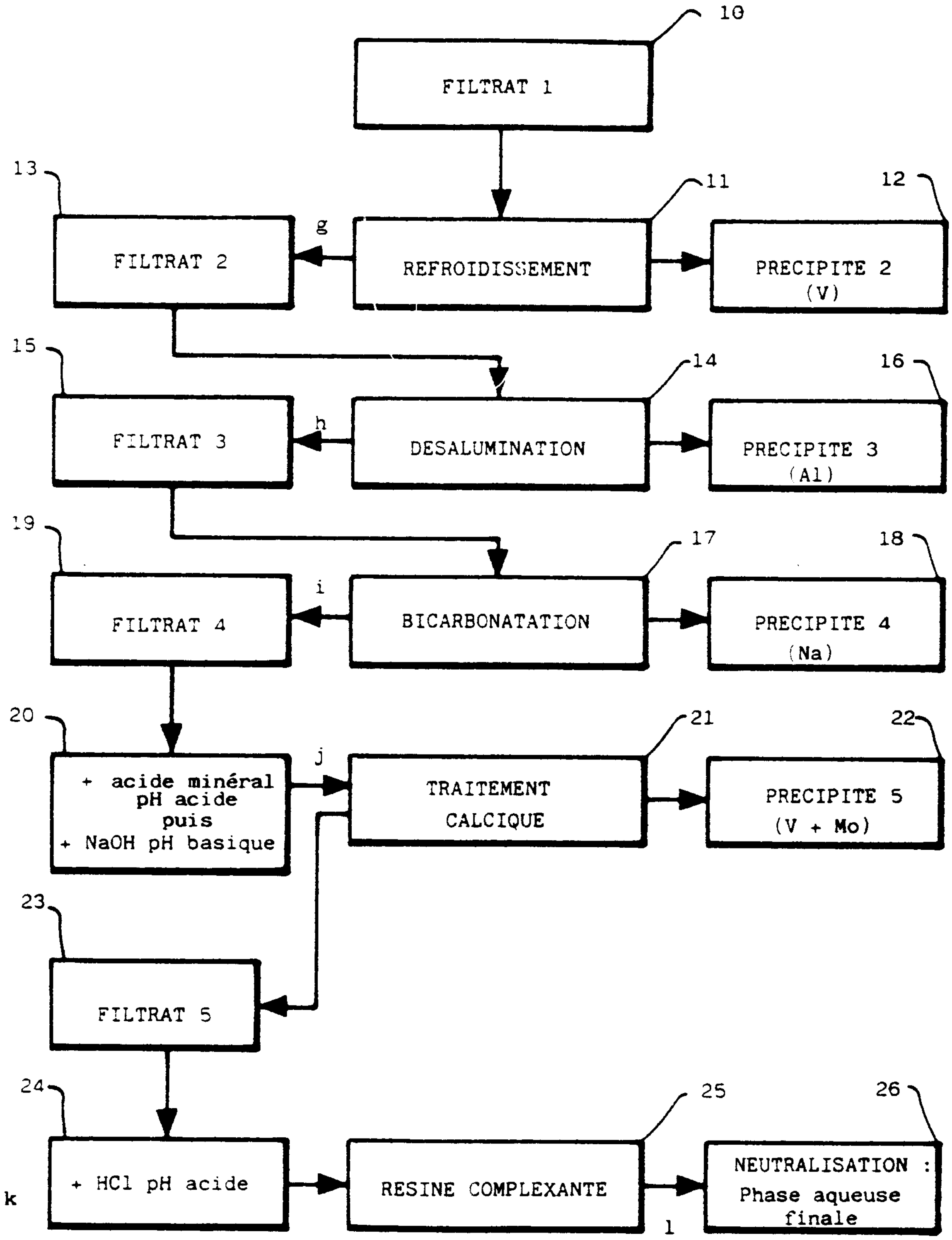
10
FILTRAT 1
13
11
12
FILTRAT 2
g
REFROIDISSEMENT
PRECIPITE 2
(V)
15
14
16
FILTRAT 3
h
DESALUMINATION
PRECIPITE 3
(Al)
19
17
18
FILTRAT 4
i
BICARBONATATION
PRECIPITE 4
(Na)
20
21
22
+ acide minéral
pH acide
puis
+ NaOH pH basique
j
TRAITEMENT
CALCIQUE
PRECIPITE 5
(V + Mo)
23
FILTRAT 5
24
25
26
k
+ HCl pH acide
RESINE COMPLEXANTE
l
NEUTRALISATION :
Phase aqueuse
finale

FIGURE 2